# EUROPEAN PATENT APPLICATION

(11) **EP 2 722 492 A1**
(43) Date of publication of application: **23.04.2014**
(21) Application number: 12189384.6
(22) Date of filing: 22.10.2012
(51) Int. Cl.: F01D 19/00, F02C 3/14, F02C 3/20, F02C 3/22, F02C 3/24, F02C 7/224, F02C 7/228, F02C 7/26, F02C 7/264

(54) **Method for operating a gas turbine with sequential combustion**

(71) Applicant: Alstom Technology Ltd, 5400 Baden (CH)
(72) Inventor: Schell, Susanne Renate, 5400 Baden (CH); Marx, Peter, 5413 Birmenstorf (CH); Knapp, Klaus, 5412 Gebenstorf (CH)

(57) **Abstract**

The present invention refers to a gas turbine with sequential combustion. In particular, the invention relates to a method to continuously operate such a gas turbine with two different fuels in two sequential combustors parallel at the same time over the entire load range.

## Description

### BACKGROUND OF THE INVENTION

The present invention refers to a gas turbine with sequential combustion. In particular, the invention relates to a method to continuously operate such a gas turbine with two different fuels.

### PRIOR ART

The type GT24/GT26 gas turbines of the applicant, which are known from the prior art, operate on the basis of the sequential combustion principle ("reheat principle for gas turbines"). This means, that the compressed air is heated in a first combustion chamber (EV=EnVironmental combustor) by adding of about 50 % of the total fuel (at base load). After this the combustion gas expands through a first turbine (single stage high-pressure turbine), which lowers the pressure by approximately a factor 2. Then the remaining fuel is added in the second combustion chamber (SEV=Sequential EnVironmental combustor), where the combustion gas is heated a second time to the maximum turbine inlet temperature and finally is expanded in the low pressure turbine. The second combustor is designed for spontaneous ignition, i.e. the temperature of the exhaust gases from the first turbine has to allow spontaneous ignition to take place in conjunction with the fuel injected into said combustor. The burners are designed to be operated with liquid fuel or with gaseous fuel. Currently the engine can be operated either exclusively on liquid fuel or on gaseous fuel. Preferable the burners are operated with gas. In case of weak fuel gas supply the engine would have to be operated exclusively on fuel oil.

Currently, there exist only two operation options in case of low fuel gas supply pressure or limited flow rates:
1. If the engine is in standstill, the engine has to be started on fuel oil and operated exclusively on fuel oil until the fuel gas supply is sufficient to operate the engine exclusively on fuel gas. Only then it is possible to switch the engine to fuel gas.
2. If the engine is on load operation, the engine has to be turned down to part load and finally switched from fuel gas to 100 % fuel oil immediately, once a lower gas pressure threshold is passed.

So far it is not known to operate such a gas turbine with liquid and gaseous fuel continuously parallel at the same time. Therefore, the flexibility of operation is limited, for example regarding the transition from one operation at one fuel to an operation with different fuel because of cost reasons (load penalty etc.).

### SUMMARY OF THE INVENTION

The aim of the present invention is to avoid the disadvantages of the prior art that have been mentioned.

The invention is based on the object of finding an easy way/method for continuous parallel operation of liquid and gaseous fuels in a gas turbine engine with sequential combustion and to determine a stable solution to operate the engine with mixed fuels.

According to the invention, this object is achieved by a method for operating a a gas turbine with sequential combustion, in which two combustors are arranged sequentially, wherein one combustor is operated on gaseous fuel, while the other combustor is parallel operated on liquid fuel at the same time.

According to independent claim 1 a method is disclosed for operating a gas turbine with two sequential combustors and with an optionally arranged intermediate turbine between the two combustors, wherein in the first combustor compressed air is heated by a first fuel thereby producing exhaust gas, which exhaust gas is optionally at least partly expanded in the turbine and then heated in the second combustor by a different second fuel, and wherein the gas turbine is continuously operated with the two different fuels in parallel at the same time and over the desired load range

With this new idea it is possible to use partly fuel gas and partly fuel oil for continuous operation of the gas turbine.

A preferred embodiment of the invention is that the first combustor starts with one fuel and ignites the second combustor with the second fuel. In detail, the method has the following steps
- the first combustor is ignited with the first fuel,
- the first fuel flow into the first combustor is increased thereby increasing the load,
- after reaching a certain (predetermined) load the second combustor is ignited with a second different fuel and
- the second fuel flow is increased thereby increasing the load until 100 % of the load are reached.

In a second embodiment both combustors are operated with the same fuel, for example gas, firstly and only one combustor is switched to the other fuel (liquid fuel) if it is required. In detail, the method has the following steps
- operating the first and the second combustors with 100% of the first fuel,
- switching the operation of the first combustor to the second fuel by reducing the first fuel flow at a time t1 and starting the input of the second fuel at the same time t1,
- reducing the input of the first fuel flow until 0 % and increasing the second fuel (4") flow until 100 %.

Such an above-mentioned requirement could be for example cost reduction by using cheaper fuel while the cheaper fuel is only available in a limited quantity so that it is not enough for operation of both combustors. Another requirement could be a reduced gas pressure does not allow operation of the 1^{st} combustor at full load. Instead of reducing the load to accommodate the reduced pressure the 1^{st} combustor could be switched to fuel oil operation, while the 2^{nd} combustor is continuing running at fuel gas.

Having two fuels in the combustors does not limit the operational flexibility. Loading, de-loading, protective actions (e.g. load rejection, protective load shedding) frequency response and fuel switchover are possible without other limitations as known for fuel gas operation or for fuel oil operation.

### BRIEF DESCRIPTION OF THE DRAWINGS

Exemplary embodiments of the invention are illustrated in the drawing, in which:
- Fig. 1:: shows schematically a gas turbine engine with the sequential combustion (Prior Art);
- Fig. 2:: shows a schematic ideal diagram (fuels of both combustors versus load) for one embodiment of the invention (ignition on different fuels);
- Fig.3:: shows a schematic ideal diagram (fuels of both combustors versus time) for a second embodiment of the invention (switching to different fuels);
- Fig. 4:: shows a schematic example of starting the first combustor on fuel gas and igniting the second combustor on fuel oil and
- Fig. 5: shows a schematic example of starting with 100 % fuel gas and switching the first combustor to fuel oil.

### DETAILED DESCRIPTION OF DIFFERENT EMBODIMENTS OF THE

### INVENTION

The invention is explained in more detail below on the basis of several exemplary embodiments and the drawings.

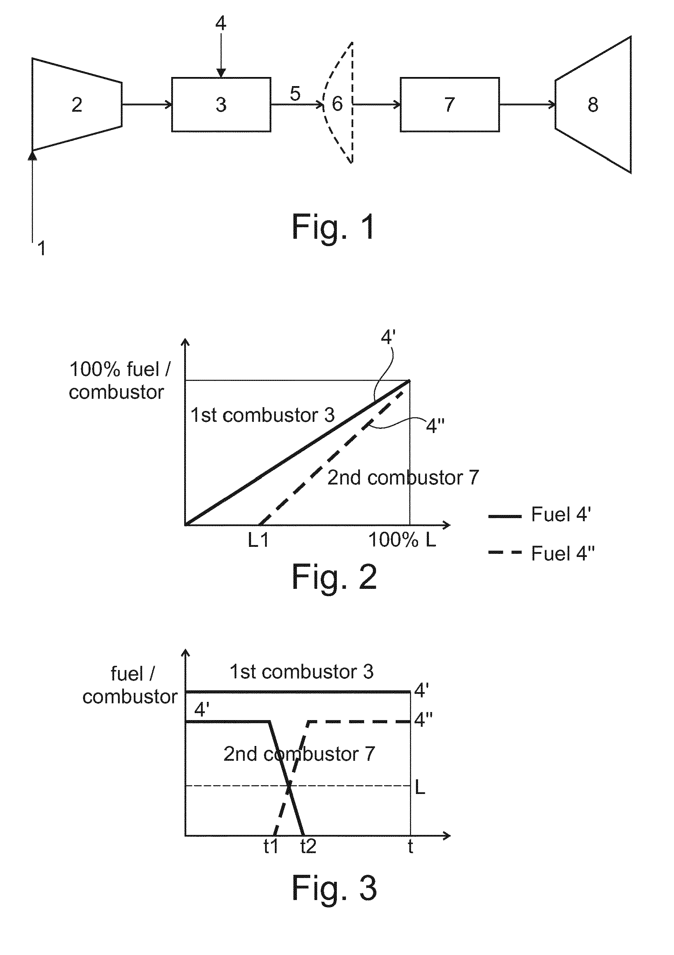

Fig. 1 shows schematically a gas turbine engine 1 with sequential combustion according to the prior art.

Air 1 is taken from the environment and delivered into a compressor 2, where the air 1 is compressed. The compressed air is then heated in a first combustor 3 by adding of about 50 % of the total fuel 4 (at base load), for example gaseous fuel. After this the combustion gas 5 expands through a first turbine 6, which could be arranged optionally and which lowers the pressure of the combustion gas 5 by approximately a factor 2. Then the remaining fuel 4 is added in the second combustor 7, where the combustion gas 5 is heated a second time to the maximum turbine inlet temperature and finally is expanded in the low pressure turbine 8. So far, the engine can be operated exclusively either on liquid or on gaseous fuel.

The invention is based on the idea, that with the sequentially arranged combustors 3, 5 as shown in Fig. 1, the gas turbine can continuously be operated with one combustor on a different fuel than the other combustor. For example, the first combustor 3 is operated on gaseous fuel 4', while the second combustor 7 is operated on liquid fuel (oil) 4" or vice versa.

Two different possibilities exist to achieve different fuel for different combustors:
1. Ignition of different fuels
2. Switching to different fuels

The first one can be seen in Fig. 2. Fig. 2 shows in a schematic ideal diagram the dependences between the percentage of the fuel of both combustors 3, 7 and the load L during operation with different fuels 4' and 4" in the two combustors 3, 7. The first combustor 3 is ignited with the first fuel 4', the fuel 4' input is increased and by increasing of the input of the fuel 4' the load is increased. At a certain load L1 the second combustor 7 is ignited with a second fuel 4", the fuel 4" flow is increased and by increasing the input of the fuel 4" the load L is increased until 100 % are reached.

The second one can be seen in Fig. 3. Fig. 3 shows in a schematic ideal diagram the dependences between the percentage of fuel 4 of both combustors 3, 7 and the time t with different fuels 4', 4" in the two combustors 3, 7. The load L remains constant over the time t as well as the input of the fuel 4' into the first combustor 3. The second combustor 7 is operated with the same kind of fuel 4' firstly, then (at a time t1) the percentage of fuel 4' for combustor 7 is reduced and at same time t1 the input of different fuel 4" into the combustor 7 starts. When the percentage of the first fuel 4' in the second combustor 7 is 0 % at a time t2 the percentage of the second fuel 4" in the combustor 7 is 100 %.

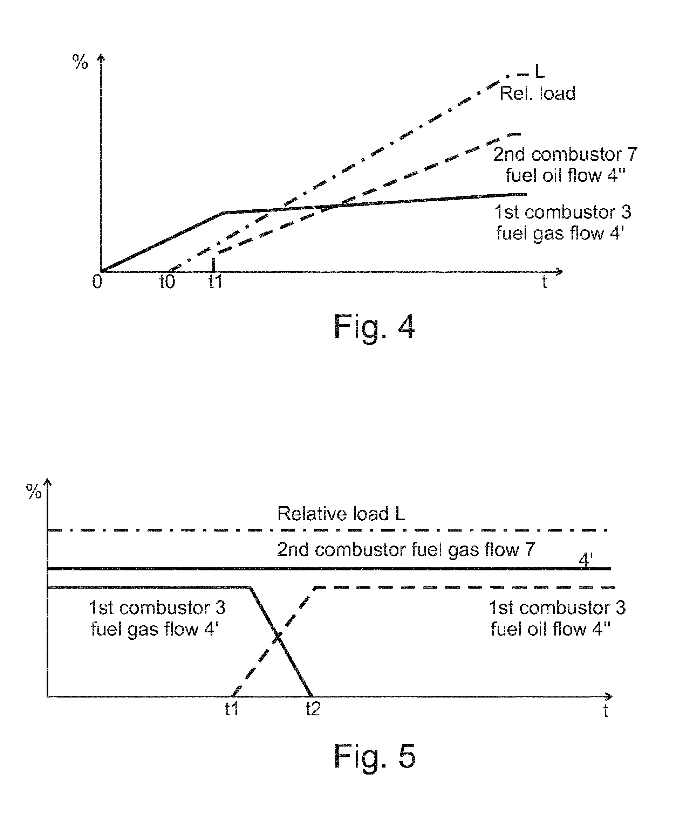

Fig. 4 shows a schematic example of operating the first combustor on a first fuel and ignition and loading the second combustor on a different second fuel. The first combustor 3, here an EV combustor with annular arranged premix low NOx EV-burners, starts on fuel gas 4'. After some time lag t0 the load (in %) is increasing according to the increasing fuel gas 4' flow. Then, at a time t1, the fuel gas 4' flow of the first combustor 3 is increased less and igniting the second combustor 7 (SEV combustor) on fuel oil 4" starts at the same time t1 followed by loading until 100 % of the fuel is reached. As a result there is a continuous increasing of the total relative load until 100 % are reached.

Fig. 5 shows schematically a second embodiment of the invention. The percentage of the relative load, of the fuel gas 4' and the fuel oil 4" in the first combustor 3 and of the fuel gas 4' in the second combustor 7 is plotted against the time t. Fig. 5 shows an example starting with 100% fuel gas 4' (total, in both combustors 3, 7) and then switching the first combustor 3 to fuel oil 4". The relative load L remains constant over the whole time t as well as the percentage of the fuel gas 4' flow into the second combustor 7. The second combustor 7 is operated with the same kind of fuel (gas 4') and a constant fuel gas flow over the whole time t. The first combustor 3 starts with 100% fuel gas 4', then (at a time t1) the percentage of fuel gas 4' for first combustor 3 is reduced and at same time t1 the input of fuel oil 4" into the combustor 3 starts. When the percentage of the first fuel 4' flow in the first combustor 3 is 0 at a time t2, the percentage of the second fuel 4" in the combustor 3 is 100.

Therefore, there are three different main ranges over operation time:
I. 100 % fuel gas operation (first and second combustor)
II. Fuel switch operation (only first combustor)
III. First combustor operates on fuel oil; second combustor operates on fuel gas.

Having two fuels in the combustor does not limit the operational flexibility; loading, de-loading, protective action (e.g. load rejection, protective load shedding), frequency response and fuel switchover are possible without other limitations as known for fuel gas or fuel oil operation.

The first fuel 4' could be gaseous fuel and the second fuel 4" could be liquid fuel or vice versa.

In case the fuel gas supply is restored, it is no problem to switch both combustors back to fuel gas operation without load penalty.

In case the fuel gas supply gets below the limit of both combustors operated at fuel gas, the combustor still operated at fuel gas can be switched to fuel oil without load penalty.

The following advantages are associated with the disclosed new technical idea:
1. The possibility to operate a gas turbine with two different fuels without load or flexibility penalty, and therefore the flexibility to operate one combustor with the cheaper fuel, even if the fuel supply would not be sufficient to operate both combustors with the cheaper fuel.
2. The smooth transition from an operation at one fuel to an operation with different fuel in each combustor without load penalty.
3. The possibility to switch back to the original fuel, when the requirement to operate at different fuels is no longer given, independent of what the start fuel was.
4. The possibility to switch completely to the second fuel, in case the fuel supply gets below both combustor requirements
5. The possibility to have black grid restoration with fuel oil in the first combustor and the second combustor at fuel gas when the supply of fuel gas (pressure or/and flow) is not sufficient for both, for instance generating power (in island mode) for a fuel gas compressor
6. The possibility to switch the first combustor to fuel oil in case the fuel gas pressure drops below the requirement for operation

### List of Reference Numbers

- 1: air
- 2: compressor
- 3: first combustor
- 4: fuel (4', 4" different kind of fuel)
- 5: exhaust gas
- 6: intermediate turbine (arranged between 3 and 7), for example high-pressure turbine
- 7: second combustor
- 8: turbine
- t: time
- L: load, relative load

## Claims

1. Method for operating a gas turbine with two sequential combustors (3, 7) and with an optionally arranged intermediate turbine (6) between the two combustors (3, 7), wherein in the first combustor (3) compressed air (1) is heated by a first fuel (4') thereby producing exhaust gas (5), which exhaust gas (5) is optionally at least partly expanded in the turbine (6) and then heated in the second combustor (7) by a different second fuel 4", and wherein the gas turbine is continuously operated with the two different fuels (4', 4") in parallel at the same time and over the desired load range.

2. Method according to claim 1, **characterized in** the following steps
- the first combustor (3) is ignited with the first fuel (4'),
- the first fuel (4') flow into the first combustor (3) is increased thereby increasing the load (L),
- after reaching a load (L1) the second combustor (7) is ignited with a second different fuel (4") and
- the second fuel (4") flow is increased thereby increasing the load (L) until 100 % are reached.

3. Method according to claim 1, **characterized in** the following steps
- operating the first and the second combustors (3, 7) with 100% of the first fuel (4'),
- switching the operation of the first combustor (3) to the second fuel (4") by reducing the first fuel (4') flow at a time t1 and starting the input of the second fuel (4") at the same time t1 and
- reducing the input of the first fuel (4') flow until 0 % and increasing the second fuel (4") flow until 100 %.

4. Method according to one of Claims 1 to 3, **characterized in that** that the first fuel (4') is gas and the second fuel (4") is oil.

5. Method according to one of Claims 1 to 3, **characterized in that** that the first fuel (4') is oil and the second fuel (4") is gas.
